# EUROPEAN PATENT APPLICATION

(11) **EP 4 671 325 A1**
(43) Date of publication of application: **31.12.2025**
(21) Application number: 24760625.4
(22) Date of filing: 23.02.2024
(51) Int. Cl.: C08L 67/02, C08L 69/00, C08G 64/18, C08K 3/32, C08K 3/016, C08K 7/14

(54) **LASER-WELDABLE FLAME-RETARDANT POLYESTER RESIN COMPOSITION AND MOLDED ARTICLE CONTAINING SAME**

(30) Priority: 24.02.2023 KR 20230025025
(71) Applicant: Samyang Corporation, Jongno-gu Seoul 03129 (KR)
(72) Inventor: KIM, Nung Hyun, Jinju-si Gyeongsangnam-do 52790 (KR); KANG, Min Goo, Daejeon 34022 (KR); AN, Tae Jin, Seoul 06664 (KR); OH, Seok Bin, Incheon 22188 (KR); HAN, Jung Kyu, Sejong 30092 (KR)
(74) Representative: Gleiss Große Schrell und Partner mbB
(86) International application number: PCT/KR2024/002411
(87) International publication number: WO 2024/177437

(57) **Abstract**

The present invention relates to a laser-weldable flame-retardant polyester resin composition and a molded article containing same and, more specifically, to a polyester resin composition and a molded article comprising same, wherein the polyester resin composition contains polybutylene terephthalate (PBT) and polyethylene terephthalate (PET) at a specific mixing weight ratio and further contains polycarbonate (PC), a polysiloxane-polycarbonate (Si-PC) copolymer, or a mixture thereof, and a flame retardant, and thus exhibits superb laser weldability due to a high laser transmittance and a small deviation in transmittance according to the injection condition, as well as excellent mechanical characteristics and flame retardancy.

## Description

### TECHNICAL FIELD

The present invention relates to a laser-weldable flame-retardant polyester resin composition and molded article comprising the same, and more specifically, it relates to a polyester resin composition which comprises polybutylene terephthalate (PBT) and polyethylene terephthalate (PET) with a specific mixing weight ratio, and further comprises polycarbonate (PC), polysiloxane-polycarbonate (Si-PC) copolymer or a mixture thereof and a flame retardant, and has high laser transmittance and a small deviation in transmittance according to injection conditions, and thus exhibits excellent laser weldability, while also having excellent mechanical properties and flame retardancy, and a molded article comprising the same.

### BACKGROUND ART

Among polyester resins, polybutylene terephthalate (PBT) is an engineering plastic that has a high degree of crystallinity, relatively excellent mechanical properties and heat resistance, and excellent dimensional stability against temperature changes. In particular, PBT has a relatively low volume resistivity among engineering plastics, and due to the low moisture absorption, it has excellence in electrical properties such as electrical insulation, arc resistance, dielectric breakdown strength, etc. and the high crystallization temperature during injection molding allows for shortening the cooling time, resulting in high productivity in a short period of time. Because of such characteristics, PBT is widely used in electrical, electronic products, and interior/exterior parts for automotive.

In particular, recently, due to vehicle electrification and environmental regulations, the number of automotive electrical components requiring non-halogen flame retardant properties and laser welding is increasing. Laser welding of thermoplastic resin is a technology for bonding two thermoplastic resin compositions in contact with each other by using a laser beam as an energy source, wherein the irradiated laser beam penetrates a thermoplastic resin composition called a transmission layer, and is absorbed in the surface of a thermoplastic resin composition of an absorption layer in contact with the transmission layer and converted into heat energy. At this time, when the temperature of the contact surface of the two thermoplastic resin compositions rises above the melting points of the two resins, the resins are melted, and after stopping the laser beam irradiation for a certain period of time, the molten resins solidify again and the transmission layer and the absorption layer are bonded to each other. Such a laser welding technology has the effects of shortening the processing time, saving labor, and increasing productivity as compared with other existing bonding methods, and the bonded surface is completely sealed and thus can protect internal components from contamination by external moisture, etc.

However, resin compositions comprising PBT and flame retardant have problems of rapid crystallization of PBT and lowering of laser transmittance due to the flame retardant. The crystallization can be controlled by alloying polyethylene terephthalate (PET) with PBT, but variation in laser transmittance is caused by the addition of flame retardant and according to the degree of crystallization or mold temperature during injection, resulting in poor welding.

Therefore, it is still a difficult problem to produce a resin composition that comprises crystalline PBT and a flame retardant, and nonetheless is capable of laser welding, and thus it is requested to develop a material that implements flame retardant properties without causing a deviation in laser transmittance even if the mold temperature changes due to the change in the size or thickness of the molded product.

### CONTENTS OF THE INVENTION

### PROBLEMS TO BE SOLVED

The purpose of the present invention is to provide a polyester resin composition that comprises PBT and a flame retardant, and nonetheless has high laser transmittance and a small deviation in transmittance according to injection conditions, and thus exhibits excellent laser weldability, while also having excellent mechanical properties and flame retardancy, and a molded article comprising the same.

### TECHNICAL MEANS

In order to achieve the above purpose, the present invention provides a polyester resin composition comprising: (A) polybutylene terephthalate (PBT); (B) polyethylene terephthalate (PET); (C) polycarbonate (PC), polysiloxane-polycarbonate (Si-PC) copolymer, or a mixture thereof; and (D) flame retardant; wherein the PBT is comprised in an amount of from more than 1 part by weight to less than 3.2 parts by weight, based on 1 part by weight of the PET, and the composition exhibits a laser transmittance of higher than 18%.

According to the other aspect, the present invention provides a molded article comprising the polyester resin composition of the present invention.

### EFFECT OF THE INVENTION

According to the present invention, it is possible to obtain a polyester resin composition which has a laser transmittance of higher than 18% to the 980 nm wavelength range and so can be suitably used as a transmission layer material for laser welding, and has the deviation of the laser transmittance according to the mold temperature during the injection process is as small as 5 or less so that the stability can be greatly improved and the defect rate during laser welding can be significantly reduced, and at the same time, has excellent flame retardancy satisfying the UL94 1.5 mm V-0 flame retardancy characteristics, and also has excellent mechanical properties such as tensile strength and impact strength, and heat resistance, and a molded article comprising the same.

### CONCRETE MODE FOR CARRYING OUT THE INVENTION

The present invention is explained in more detail below.

The polyester resin composition of the present invention comprises (A) polybutylene terephthalate (PBT); (B) polyethylene terephthalate (PET); (C) polycarbonate (PC), polysiloxane-polycarbonate (Si-PC) copolymer, or a mixture thereof; and (D) flame retardant; wherein the PBT is comprised in an amount of from more than 1 part by weight to less than 3.2 parts by weight, based on 1 part by weight of the PET.

In the polyester resin composition of the present invention, if the amount of the PBT is 1 part by weight or less based on 1 part by weight of the PET, the tensile strength and heat resistance of the composition may become poor, and to the contrary, if it is 3.2 parts by weight or more, the impact strength and laser transmittance of the composition may become poor, and the deviation of the laser transmittance may become large.

More specifically, in the polyester resin composition of the present invention, the amount of the PBT based on 1 part by weight of the PET may be more than 1 part by weight, 1.01 parts by weight or more, 1.05 parts by weight or more, 1.1 parts by weight or more, 1.15 parts by weight or more, or 1.2 parts by weight or more, and it also may be less than 3.2 parts by weight, 3.15 parts by weight or less, 3.1 parts by weight or less, 3 parts by weight or less, 2.9 parts by weight or less, 2.8 parts by weight or less, 2.7 parts by weight or less, 2.6 parts by weight or less, 2.5 parts by weight or less, 2.4 parts by weight or less, or 2.33 parts by weight or less, but it is not especially limited thereto.

### (A) polybutylene terephthalate (PBT)

The polyester resin composition of the present invention comprises polybutylene terephthalate.

Polybutylene terephthalate has a repeating unit represented by the following chemical formula 1 and has a melting temperature of 215 to 235°C:

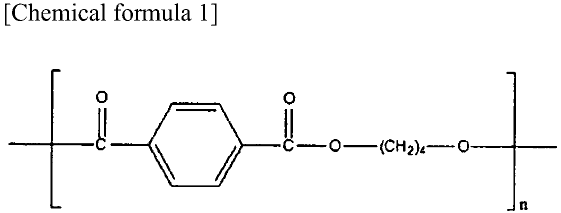

In the above chemical formula 1, n is an integer of 1 or more, and specifically it may be an integer of 50 to 200.

In an embodiment, considering the processability and mechanical properties of the composition, the polybutylene terephthalate may have an intrinsic viscosity (IV) of 0.7 to 1.5 dl/g, more specifically, an IV of 0.8 to 1.3 dl/g or 1.1 to 1.3 dl/g, and a crystallization temperature of 160 to 200°C, more specifically, 170 to 190°C, but it is not limited thereto.

In an embodiment, the polyester resin composition of the present invention may comprise polybutylene terephthalate in an amount of from more than 23 parts by weight to less than 40 parts by weight, based on total 100 parts by weight of the composition. If the amount of polybutylene terephthalate in total 100 parts by weight of the composition is 23 parts by weight or less, the solidification speed during injection molding of the composition may be slow and thus the cycle time may increase, and to the contrary, if it is 40 parts by weight or more, the laser transmittance of the composition may become lower.

More specifically, in total 100 parts by weight of the polyester resin composition of the present invention, the amount of polybutylene terephthalate may be, for example, more than 23 parts by weight, 23.1 parts by weight or more, 23.5 parts by weight or more, 24 parts by weight or more, 24.1 parts by weight or more, 24.5 parts by weight or more, or 25 parts by weight or more, and it also may be less than 40 parts by weight, 39.9 parts by weight or less, 39 parts by weight or less, 38 parts by weight or less, 37 parts by weight or less, 36 parts by weight or less, or 35 parts by weight or less, but it is not especially limited thereto.

### (B) polyethylene terephthalate (PET)

The polyester resin composition of the present invention further comprises polyethylene terephthalate.

Polyethylene terephthalate has a repeating unit represented by the following chemical formula 2 and has a melting temperature of 255 to 265°C:

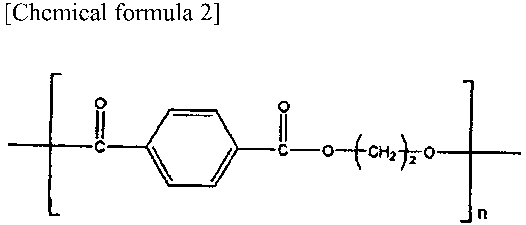

In the above chemical formula 2, n is an integer of 1 or more, and specifically it may be an integer of 40 to 160.

In an embodiment, considering the processability and mechanical properties of the composition, the polyethylene terephthalate may have an intrinsic viscosity (IV) of 0.5 to 1.0 dl/g, more specifically, an IV of 0.5 to 0.8 dl/g or 0.65 to 0.8 dl/g, and a crystallization temperature of 160 to 200°C, more specifically, 170 to 190°C, but it is not limited thereto.

In an embodiment, the polyester resin composition of the present invention may comprise polyethylene terephthalate in an amount of from more than 10 parts by weight to less than 22 parts by weight, based on total 100 parts by weight of the composition. If the amount of polyethylene terephthalate in total 100 parts by weight of the composition is 10 parts by weight or less, the laser transmittance of the composition may become lower, and to the contrary, if it is 22 parts by weight or more, the solidification speed during injection molding of the composition may be slow and thus the cycle time may increase.

More specifically, in total 100 parts by weight of the polyester resin composition of the present invention, the amount of polyethylene terephthalate may be, for example, more than 10 parts by weight, 10.1 parts by weight or more, 10.5 parts by weight or more, 11 parts by weight or more, 11.5 parts by weight or more, or 12 parts by weight or more, and it also may be less than 22 parts by weight, 21.9 parts by weight or less, 21.5 parts by weight or less, or 21 parts by weight or less, but it is not especially limited thereto.

### (C) polycarbonate (PC), polysiloxane-polycarbonate (Si-PC) copolymer, or a mixture thereof

The polyester resin composition of the present invention further comprises polycarbonate (PC), polysiloxane-polycarbonate (Si-PC) copolymer, or a mixture thereof.

As a polycarbonate resin that can be comprised in the resin composition of the present invention, an aromatic polycarbonate resin is preferable, but there is no special limitation to its kind as long as the technical idea of the present invention can be realized thereby, and any thermoplastic aromatic polycarbonate resin conventionally used in this field can be used.

In an embodiment, the aromatic polycarbonate resin may be prepared from a dihydric phenol, a carbonate precursor and a molecular weight-controlling agent. The dihydric phenol is one of the monomers constituting the aromatic polycarbonate resin, and it may be a compound represented by the following chemical formula 3:

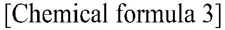

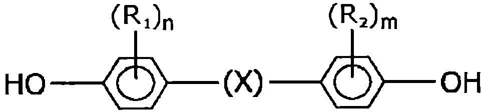

In the above chemical formula 3,
X represents a linear, branched or cyclic alkylene group having no functional group; or a linear, branched or cyclic alkylene group having one or more functional groups selected from the group consisting of sulfide group, ether group, sulfoxide group, sulfone group, ketone group, naphthyl group and isobutylphenyl group, and more specifically, X may be a linear alkylene group having 1 to 10 carbon atoms or a branched alkylene group having 3 to 10 carbon atoms, or a cyclic alkylene group having 3 to 10 carbon atoms;
each of R₁ and R₂ independently represents halogen atom or an alkyl group, for example, a linear alkyl group having 1 to 20 carbon atoms, a branched alkyl group having 3 to 20 carbon atoms, or a cyclic alkyl group having 3 to 20 (preferably, 3 to 6) carbon atoms; and
each of n and m independently represents an integer of 0 to 4.

The non-limited example of the above dihydric phenol may be bisphenol (more specifically, 2,2-bis(4-hydroxyphenyl)propane (bisphenol A)), hydroquinone, 4,4'-dihydroxydiphenyl, bis(4-hydroxyphenyl)methane, 1,1-bis(4-hydroxyphenyl)cyclohexane, 2,2-bis(3,5-dimethyl-4-hydroxyphenyl)propane, bis(4-hydroxyphenyl)sulfide, bis(4-hydroxyphenyl)sulfone, bis(4-hydroxyphenyl)sulfoxide, bis(4-hydroxyphenyl)ketone, bis(4-hydroxyphenyl)ether, halogenated bisphenol such as 2,2-bis(3,5-dibromo-4-hydroxyphenyl)propane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, etc., and preferably bisphenol A may be used.

The carbonate precursor is another monomer constituting the aromatic polycarbonate resin, and its non-limited example may be carbonyl chloride (phosgene), carbonyl bromide, bis halo formate, diphenyl carbonate, dimethyl carbonate, etc., and preferably carbonyl chloride (phosgene) may be used.

As the molecular weight-controlling agent, the conventionally known compound, i.e., a monofunctional compound similar to a monomer used in preparation of thermoplastic aromatic polycarbonate resin may be used. The non-limiting examples of the molecular weight-controlling agent may be derivatives based on phenol (for example, para-isopropylphenol, para-tert-butylphenol (PTBP), para-cumylphenol, para-isooctylphenol, para-isononylphenol, etc.) aliphatic alcohols, etc., and preferably para-tert-butylphenol (PTBP) may be used.

The aromatic polycarbonate resin prepared from such dihydric phenol, carbonate precursor and molecular weight-controlling agent may be, for example, linear polycarbonate resin, branched polycarbonate resin, copolycarbonate resin, polyestercarbonate resin, silicone copolymerized polycarbonate, etc., and such a resin alone or a mixture of two or more thereof may be used.

The aromatic polycarbonate resin may have a preferable viscosity average molecular weight (Mv, measured in methylene chloride solution at 25°C) (g/mol) of 15,000 to 40,000, more preferably 17,000 to 30,000, and most preferably 20,000 to 30,000. If the viscosity average molecular weight of the aromatic polycarbonate resin is less than 15,000, mechanical properties such as impact strength, tensile strength, etc. may be lowered, and to the contrary, if it is greater than 40,000, melt viscosity increases, and thereby problems may be caused in resin processing.

The polysiloxane-polycarbonate copolymer that can be comprised in the resin composition of the present invention comprises a hydroxy-terminated siloxane and a polycarbonate block as repeated units.

In an embodiment, the hydroxy-terminated siloxane comprised in the polysiloxane-polycarbonate copolymer may have a weight average molecular weight (Mw) of 2,500 to 15,000, more specifically 3,500 to 13,000, and still more specifically 4,000 to 9,000. If the weight average molecular weight of the hydroxy-terminated siloxane is less than 2,500, the effect of improving low-temperature impact resistance may be little, and to the contrary, if it is greater than 15,000, the reactivity may be lowered and thus there may be a problem in synthesizing the polysiloxane-polycarbonate copolymer with desired molecular weight.

In an embodiment, the amount of the hydroxy-terminated siloxane in the polysiloxane-polycarbonate copolymer may be 6.1 % by weight or more, 6.5 % by weight or more, or 7 % by weight or more, based on 100 % by weight of the copolymer. There is no special limitation to the upper limit of the amount of the hydroxy-terminated siloxane in the copolymer, but considering economic feasibility, it may be 15 % by weight or less, 10 % by weight or less, or 9 % by weight or less.

In an embodiment, the hydroxy-terminated siloxane in the polysiloxane-polycarbonate copolymer has the following chemical formula 4a or chemical formula 4:

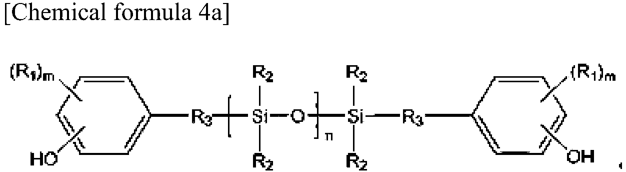

In the above chemical formula 4a,
R₁ independently represents halogen atom, hydroxy group, an alkyl, alkoxy or aryl group having 1 to 20 carbon atoms, and for example, the halogen atom may be Cl or Br; the alkyl group may be an alkyl group having 1 to 13 carbon atoms, for example, methyl, ethyl or propyl; the alkoxy group may be an alkoxy group having 1 to 13 carbon atoms, for example, methoxy, ethoxy or propoxy; and the aryl group may be an aryl group having 6 to 10 carbon atoms, for example, phenyl, chlorophenyl or tolyl;
R₂ independently represents a hydrocarbon group having 1 to 13 carbon atoms, or hydroxy group, and for example, R₂ may be an alkyl or alkoxy group having 1 to 13 carbon atoms, an alkenyl or alkenyloxy group having 2 to 13 carbon atoms, a cycloalkyl or cycloalkoxy group having 3 to 6 carbon atoms, an aryloxy group having 6 to 10 carbon atoms, an aralkyl or aralkoxy group having 7 to 13 carbon atoms, or an alkaryl or alkaryloxy group having 7 to 13 carbon atoms;
R₃ independently represents an alkylene group having 2 to 8 carbon atoms;
m independently represents an integer of 0 to 4; and
n represents an integer of 30 to 200, preferably an integer of 40 to 170, and more preferably an integer of 50 to 120.

In an embodiment, as the hydroxy-terminated siloxane of the above chemical formula 4a, a siloxane monomer of Dow Corning 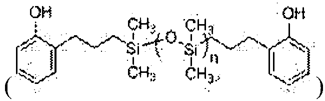 may be used, but it is not limited thereto.

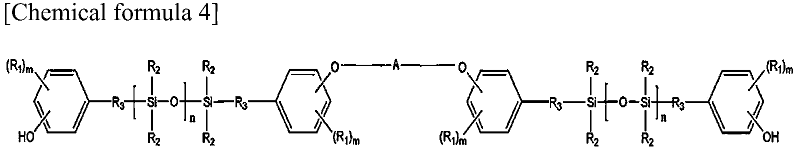

In the above chemical formula 4, R₁, R₂, R₃, and m are the same as defined in the above chemical formula 4a; n independently represents an integer of 15 to 100, preferably an integer of 20 to 80, and more preferably an integer of 25 to 60; and A represents a structure of the following chemical formula 5 or chemical formula 6:

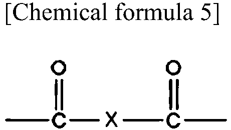

In the above chemical formula 5, X is Y or NH-Y-NH, wherein Y represents a linear or branched aliphatic group having 1 to 20 carbon atoms; a cycloalkylene group (for example, a cycloalkylene group having 3 to 6 carbon atoms); or a mononucleus or polynucleus arylene group having 6 to 30 carbon atoms which is unsubstituted or substituted with halogen atom, alkyl group, alkoxy group, aryl group or carboxyl group; and for example, Y may be an aliphatic group which is unsubstituted or substituted with halogen atom; an aliphatic group comprising oxygen, nitrogen or sulfur atom in the main chain; or an arylene group which can be derived from bisphenol A, resorcinol, hydroquinone or diphenylphenol, and for example, Y may be represented by one of the following chemical formulas 5a to 5h:

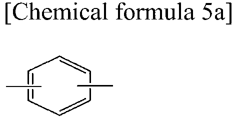

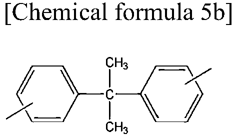

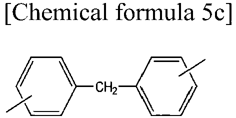

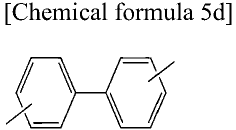

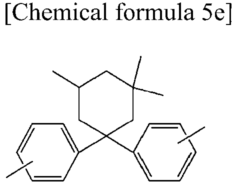

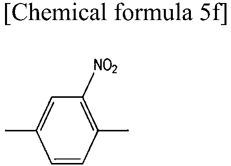

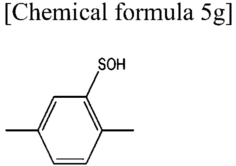

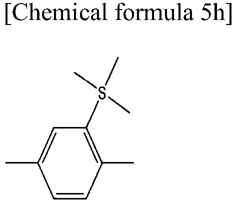

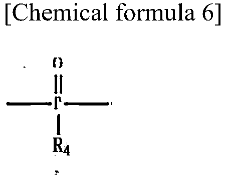

In the above chemical formula 6, R₄ represents an aromatic hydrocarbon group or aromatic/aliphatic mixed hydrocarbon group having 6 to 30 carbon atoms, or an aliphatic hydrocarbon group having 1 to 20 carbon atoms, wherein R₄ may have a structure containing halogen, oxygen, nitrogen or sulfur in addition to carbon atom, and for example, R₄ may be phenyl, chlorophenyl or tolyl (preferably, phenyl).

In an embodiment, the hydroxy-terminated siloxane of the above chemical formula 4 may be a reaction product of a hydroxy-terminated siloxane of the above chemical formula 4a (where n represents an integer of 15 to 100) and an acyl compound, wherein the acyl compound may have, for example, a structure of aromatic type, aliphatic type, or mixed type containing aromatic and aliphatic groups together. If the acyl compound is an aromatic or mixed type, it may have 6 to 30 carbon atoms, and if the acyl compound is an aliphatic type, it may have 1 to 20 carbon atoms. The acyl compound may further contain halogen, oxygen, nitrogen or sulfur atom.

In other embodiment, the hydroxy-terminated siloxane of the above chemical formula 4 may be a reaction product of a hydroxy-terminated siloxane of the above chemical formula 4a (where n represents an integer of 15 to 100) and a diisocyanate compound, wherein the diisocyanate compound may be, for example, 1,4-phenylenediisocyanate, 1,3-phenylenediisocyanate or 4,4'-methylenediphenyl diisocyanate.

In another embodiment, the hydroxy-terminated siloxane of the above chemical formula 4 may be a reaction product of a hydroxy-terminated siloxane of the above chemical formula 4a (where n represents an integer of 15 to 100) and a phosphorus-containing compound (aromatic or aliphatic phosphate compound), wherein the phosphorus-containing compound may be represented by the following chemical formula 4b:

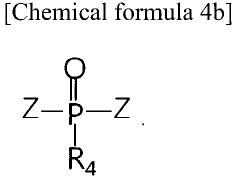

In the above chemical formula 4b, R₄ is the same as defined in the above chemical formula 3, and Z independently represents phosphorus atom, halogen atom, hydroxy group, carboxyl group, or alkyl, alkoxy or aryl group (having 1 to 20 carbon atoms).

In an embodiment, the polycarbonate block in the polysiloxane-polycarbonate copolymer has the following chemical formula 7:

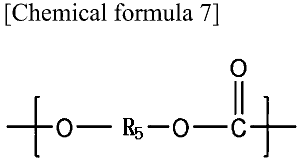

In the above chemical formula 7, R₅ represents divalent aromatic hydrocarbon group having 6 to 30 carbon atoms which is unsubstituted or substituted with divalent alkyl group (having 1 to 20 carbon atoms) (e.g., divalent alkyl group having 1 to 13 carbon atoms), divalent cycloalkyl group (e.g., divalent cycloalkyl group having 3 to 6 carbon atoms), divalent alkenyl group (e.g., divalent alkenyl group having 2 to 13 carbon atoms), divalent alkoxy group (e.g., divalent alkoxy group having 1 to 13 carbon atoms), or halogen atom or nitro, wherein the aromatic hydrocarbon group may be derived from a compound having a structure of the following chemical formula 7a:

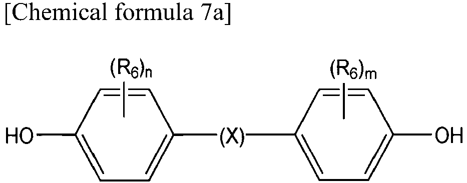

In the above chemical formula 7a, X represents alkylene group, a linear, branched, or cyclic alkylene group without functional group; or a linear, branched, or cyclic alkylene group comprising one or more functional groups such as sulfide, ether, sulfoxide, sulfone, ketone, naphthyl, isobutylphenyl, etc. and preferably, X may be a linear or branched alkylene group having 1 to 10 carbon atoms, or a cyclic alkylene group having 3 to 6 carbon atoms; R₆ independently represents a halogen atom, or alkyl group, for example, a linear or branched alkyl group having 1 to 10 carbon atoms, or a cyclic alkyl group having 3 to 20 carbon atoms (preferably, 3 to 6 carbon atoms); and each of n and m is independently an integer of 0 to 4.

Specifically, the compound of the above chemical formula 7a may be, for example, bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, 2,2-bis(4-hydroxyphenyl)propane, 2,2-bis(4-hydroxyphenyl)butane, 2,2-bis(4-hydroxyphenyl)pentane, 2,2-bis(4-hydroxyphenyl)hexane, 2,2-bis(4-hydroxyphenyl)nonane, 2,2-bis(3-methyl-4-hydroxyphenyl)propane, 2,2-bis(3-fluoro-4-hydroxyphenyl)propane, 4-methyl-2,2-bis(4-hydroxyphenyl)pentane, 4,4-bis(4-hydroxyphenyl)heptane, diphenyl-bis(4-hydroxyphenyl)methane, resorcinol, hydroquinone, 4,4'-dihydroxyphenyl ether[bis(4-hydroxyphenyl)ether], 4,4'-dihydroxy-2,5-dihydroxydiphenyl ether, 4,4'-dihydroxy-3,3'-dichlorodiphenyl ether, bis(3,5-dimethyl-4-hydroxyphenyl)ether, bis(3,5-dichloro-4-hydroxyphenyl)ether, 1,4-dihydroxy-2,5-dichlorobenzene, 1,4-dihydroxy-3-methylbenzene, 4,4'-dihydroxydiphenol[p,p'-dihydroxyphenyl], 3,3'-dichloro-4,4'-dihydroxyphenyl, 1,1-bis(4-hydroxyphenyl)cyclohexane, 1,1-bis(3,5-dimethyl-4-hydroxyphenyl)cyclohexane, 1,1-bis(3,5-dichloro-4-hydroxyphenyl)cyclohexane, 1,1-bis(3,5-dimethyl-4-hydroxyphenyl)cyclododecane, 1,1-bis(4-hydroxyphenyl)cyclododecane, 1,1-bis(4-hydroxyphenyl)butane, 1,1-bis(4-hydroxyphenyl)decane, 1,4-bis(4-hydroxyphenyl)propane, 1,4-bis(4-hydroxyphenyl)butane, 1,4-bis(4-hydroxyphenyl)isobutane, 2,2-bis(4-hydroxyphenyl)butane, 2,2-bis(3-chloro-4-hydroxyphenyl)propane, bis(3,5-dimethyl-4-hydroxyphenyl)methane, bis(3,5-dichloro-4-hydroxyphenyl)methane, 2,2-bis(3,5-dimethyl-4-hydroxyphenyl)propane, 2,2-bis(3,5-dibromo-4-hydroxyphenyl)propane, 2,2-bis(3,5-dichloro-4-hydroxyphenyl)propane, 2,4-bis(4-hydroxyphenyl)-2-methyl-butane, 4,4'-thiodiphenol[bis(4-hydroxyphenyl)sulfone], bis(3,5-dimethyl-4-hydroxyphenyl)sulfone, bis(3-chloro-4-hydroxyphenyl)sulfone, bis(4-hydroxyphenyl)sulfide, bis(4-hydroxyphenyl)sulfoxide, bis(3-methyl-4-hydroxyphenyl)sulfide, bis(3,5-dimethyl-4-hydroxyphenyl)sulfide, bis(3,5-dibromo-4-hydroxyphenyl)sulfoxide, 4,4'-dihydroxybenzophenone, 3,3',5,5'-tetramethyl-4,4'-dihydroxybenzophenone, 4,4'-dihydroxy diphenyl, methylhydroquinone, 1,5-dihydroxynaphthalene, or 2,6-dihydroxynaphthalene, but it is not limited thereto. Among them, the representative one is 2,2-bis(4-hydroxyphenyl)propane (bisphenol A). For other functional dihydric phenols, US Patent Nos. 2,999,835, 3,028,365, 3,153,008 and 3,334,154 may be referred to. The above dihydric phenol may be used alone or in combination of two or more of them.

As another monomer for the polycarbonate block, a carbonate precursor, for example, carbonyl chloride (phosgene), carbonyl bromide, bis halo formate, diphenylcarbonate, or dimethylcarbonate, etc. may be used.

The polysiloxane-polycarbonate copolymer used in the present invention preferably has a viscosity average molecular weight (Mv) of 15,000 to 30,000, and more preferably 17,000 to 22,000. If the viscosity average molecular weight of the polysiloxane-polycarbonate copolymer is less than 15,000, the mechanical properties may deteriorate seriously, and to the contrary, if it is greater than 30,000, there may be a problem in the processing of resin due to the increase of melting viscosity.

In an embodiment, the polyester resin composition of the present invention may comprise the polycarbonate (PC), polysiloxane-polycarbonate (Si-PC) copolymer, or a mixture thereof (also referred to as "resin component (C)" hereinafter) in an amount of from more than 3 parts by weight to less than 17 parts by weight, based on total 100 parts by weight of the composition. If the amount of the resin component (C) in total 100 parts by weight of the composition is 3 parts by weight or less, the flame retardancy and laser transmittance of the composition may become lower, and to the contrary, if it is 17 parts by weight or more, the mechanical properties of the composition may become worse and the deviation of the laser transmittance may become large.

More specifically, in total 100 parts by weight of the polyester resin composition of the present invention, the amount of the resin component (C) may be, for example, more than 3 parts by weight, 3.1 parts by weight or more, 3.5 parts by weight or more, 4 parts by weight or more, 4.5 parts by weight or more, or 5 parts by weight or more, and it also may be less than 17 parts by weight, 16.9 parts by weight or less, 16.5 parts by weight or less, 16 parts by weight or less, 15.5 parts by weight or less, or 15 parts by weight or less, but it is not especially limited thereto.

In an embodiment, the polyester resin composition of the present invention may comprise the polysiloxane-polycarbonate (Si-PC) copolymer in an amount of 10 parts by weight or less, and more specifically in an amount of 5 parts by weight to 10 parts by weight, based on total 100 parts by weight of the composition, but it is not especially limited thereto.

### (D) Flame retardant

The polyester resin composition of the present invention further comprises flame retardant.

In an embodiment, the flame retardant may be non-halogen flame retardant, and more specifically, it may be phosphorus-based flame retardant.

In an embodiment, non-limiting examples of the phosphorus-based flame retardant include phosphoric acid ester compound, and more specifically, phosphoric acid ester compound represented by the following chemical formula 8:

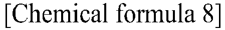

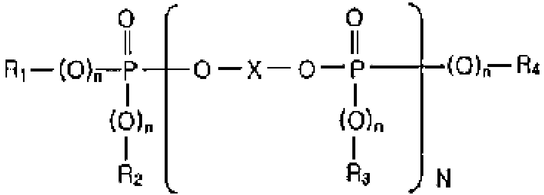

In the above chemical formula 8, R₁, R₂, R₃ and R₄ are each independently C₁-C₈ alkyl, C₅-C₆ cycloalkyl, C₆-C₂₀ aryl or C₇-C₂₀ aralkyl. Particularly preferred aryl group is cresyl, phenyl, xylenyl, propylphenyl or butylphenyl. n may independently be 0 or 1, preferably it is 1. N is 0 to 10, preferably 0.3 to 8, and more preferably 0.5 to 5. X is a mononuclear aromatic or polynuclear aromatic group having 6 to 30 carbon atoms, and preferably it may be diphenylphenol, bisphenol A, resorcinol or hydroquinone.

The phosphoric acid ester compound is also preferably a phosphoric acid ester compound of the following chemical formula 9:

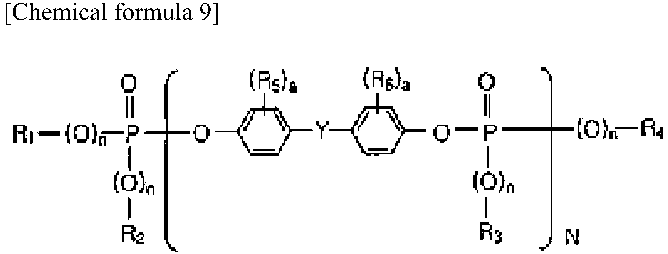

In the above chemical formula 9, R₁, R₂, R₃, R₄, n and N are the same as defined in the above chemical formula 8, Y represents C₁-C₇ alkylidene, C₁-C₇ alkylene, C₅-C₁₂ cycloalkylene, C₅-C₁₂ cycloalkylidene, -O-, -S-, -SO-, -SO₂- or -CO-, and a represents an integer of 0 to 2. Preferably, Y is C₁-C₇ alkylidene, and more preferably, it is isopropylidene or methylene.

The phosphoric acid ester compound that can be used as the phosphorus-based flame retardant in the present invention may be a monophosphate (N=0), an oligophosphate (N=1 to 10), or a mixture of monophosphate and oligophosphate.

In an embodiment, as the phosphorus-based flame retardant, one or more selected from resorcinol bis(diphenyl phosphate), bisphenol A bis(diphenyl phosphate), or N,N'-bis[di-(2,6-xylyl)phosphoryl]-piperazine may be used.

In an embodiment, the polyester resin composition of the present invention may comprise the flame retardant in an amount of from more than 5 parts by weight to less than 15 parts by weight, based on total 100 parts by weight of the composition. If the amount of the flame retardant in total 100 parts by weight of the composition is 5 parts by weight or less, the flame retardancy of the composition may become lower, and to the contrary, if it is 15 parts by weight or more, the processibility and properties of the composition may become worse.

More specifically, in total 100 parts by weight of the polyester resin composition of the present invention, the amount of the flame retardant may be, for example, more than 5 parts by weight, 5.1 parts by weight or more, 6 parts by weight or more, 7 parts by weight or more, or 8 parts by weight or more, and it also may be less than 15 parts by weight, 14.9 parts by weight or less, 14.5 parts by weight or less, 14 parts by weight or less, 13.5 parts by weight or less, or 13 parts by weight or less, but it is not especially limited thereto.

### (E) Filler

The polyester resin composition of the present invention may further comprise filler.

The filler is used to improve the heat resistance and dimensional stability of the composition, and it may be fibrous material, plate-like material, particulate material, or a combination thereof. These fillers may be used alone or in combination.

More specifically, the filler may be fibrous material such as inorganic fiber (e.g., glass, asbestos, carbon, silica, alumina, silica-alumina, aluminum silicate, zirconia, potassium titanate, silicon carbide, etc.), inorganic whisker (e.g., silicon carbide, alumina, boron nitride, etc.), organic fiber (e.g., aliphatic or aromatic polyamide, aromatic polyester, fluorine-containing resin, acrylic resin such as polyacrylonitrile, rayon, etc.); plate-like material such as talc, mica, glass, graphite; particulate material such as glass bead, glass powder, milled fiber (e.g., milled glass fiber); or wollastonite which may be in the form of plate, column, or fiber; or combinations thereof, but it is not limited thereto.

In an embodiment, the average diameter of the fibrous material may be, for example, 1 to 50 µm, specifically 3 to 30 µm, and the average length thereof may be, for example, 100 µm to 3 mm, specifically 300 µm to 1 mm, and more specifically 500 µm to 1 mm. In addition, the average particle size of the plate-like or particulate material may be, for example, 0.1 to 100 µm, specifically 0.1 to 50 µm (for example, 0.1 to 10 µm).

In an embodiment, the filler may be glass or a glass-like filler (particularly, glass fiber, glass flake, glass bead, etc.), talc, mica, wollastonite, or potassium titanate fiber, more specifically glass fiber, particularly, chopped strand product cut to conventional single fiber length.

In an embodiment, the polyester resin composition of the present invention may comprise the filler in an amount of from 10 to 50 parts by weight, based on total 100 parts by weight of the composition. If the amount of the filler in total 100 parts by weight of the composition is less than 10 parts by weight, the effect of improving heat resistance and mechanical properties of the composition according to addition of the filler may be insufficient, and to the contrary, if it is more than 50 parts by weight, the surface gloss of the composition may be significantly reduced.

More specifically, in total 100 parts by weight of the polyester resin composition of the present invention, the amount of the filler may be, for example, 10 parts by weight or more, 15 parts by weight or more, 20 parts by weight or more, 25 parts by weight or more, or 30 parts by weight or more, and it also may be 50 parts by weight or less, 45 parts by weight or less, or 40 parts by weight or less, but it is not especially limited thereto.

In addition to the above-explained components, the polyester resin composition of the present invention may further comprise one or more additives conventionally used in thermoplastic resin compositions.

Each of such additives, if present, may be used, for example, in an amount of 0.01 to 10 parts by weight, or 0.01 to 5 parts by weight, based on total 100 parts by weight of the composition.

In an embodiment, the additive may be auxiliary flame retardant.

The auxiliary flame retardant may be, for example, a fluorinated polyolefin resin, and more specifically, polytetrafluoroethylene (PTFE); polyvinylidene fluoride; a copolymer of tetrafluoroethylene and vinylidene fluoride; a copolymer of tetrafluoroethylene and hexafluoropropylene; styrene acrylonitrile-modified polytetrafluoroethylene, acrylic-modified polytetrafluoroethylene, or a mixture of two or more thereof, and more specifically may be acrylic-modified polytetrafluoroethylene, but it is not limited thereto. In the acrylic-modified polytetrafluoroethylene, the content of polytetrafluoroethylene may be 45 to 55 % by weight, based on the total weight of the acrylic-modified polytetrafluoroethylene. The acrylic-modified polytetrafluoroethylene may be in powder or granular form.

In an embodiment, the additive may be antioxidant.

The antioxidant includes, for example, organic phosphite such as tris(nonylphenyl)phosphite, tris(2,4-di-t-butylphenyl)phosphite, bis(2,4-di-t-butylphenyl)pentaerythritol diphosphite, distearyl pentaerythritol diphosphite; alkylated monophenol or polyphenol; alkylation reaction product of polyphenol and diene such as tetrakis[methylene(3,5-di-tert-butyl-4-hydroxyhydrocinnamate)] methane; butylation reaction product of para-cresol or dicyclopentadiene; alkylated hydroquinone; hydroxylated thiodiphenyl ether; alkylidene-bisphenol; benzyl compound; ester of beta-(3,5-di-tert-butyl-4-hydroxyphenyl)-propionic acid with monohydric or polyhydric alcohol; ester of beta-(5-tert-butyl-4-hydroxy-3-methylphenyl)-propionic acid with monohydric or polyhydric alcohol; ester of thioalkyl or thioaryl compound, for example, distearyl thiopropionate, dilauryl thiopropionate, ditridecyl thiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate, etc.; amide of beta-(3,5-di-tert-butyl-4-hydroxyphenyl)-propionic acid, etc., or a combination comprising one or more of the antioxidants described above.

In an embodiment, the additive may be mold release agent.

The mold release agent includes, for example, phthalic acid ester such as dioctyl-4,5-epoxy-hexahydrophthalate; tris-(octoxycarbonylethyl)isocyanurate; tristearin; difunctional or polyfunctional aromatic phosphate such as resorcinol tetraphenyl diphosphate, bis(diphenyl) phosphate of hydroquinone and bis(diphenyl) phosphate of bisphenol-A; poly-alpha-olefin; epoxidized soybean oil; silicones including silicone oil; ester, for example, fatty acid ester such as alkyl stearyl ester, for example, methyl stearate; stearyl stearate, pentaerythritol tetrastearate, etc.; combination of hydrophilic and hydrophobic nonionic surfactants including methyl stearate and polyethylene glycol polymer, polypropylene glycol polymer, and copolymer thereof, for example, methyl stearate and polyethylene-polypropylene glycol copolymer in a suitable solvent; wax such as beeswax, montan wax, paraffin wax, etc.

In an embodiment, the additive may be stabilizer.

The stabilizer includes, for example, organic phosphite such as triphenyl phosphite, tris-(2,6-dimethylphenyl)phosphite, tris-(mixed mono- and di-nonylphenyl)phosphite, etc.; phosphonate such as dimethylbenzene phosphonate, etc.; phosphate such as trimethyl phosphate, etc.; or a combination comprising one or more of the above stabilizers.

The polyester resin composition of the present invention exists in the form of a melt-mixed blend, wherein all polymer components are well dispersed with each other, and all non-polymer components are homogeneously dispersed in the polymer matrix and bound by the polymer matrix so that the blend forms a single unified body. The blend can be obtained by combining the component materials using any melt mixing method. The component materials can be mixed to provide the resin composition using a melt-mixer, such as a single or twin screw extruder, a blender, a kneader, a Banbury mixer, or the like. Alternatively, a portion of the materials can be mixed in the melt-mixer, and then the remainder of the materials can be added and further melt-mixed. In preparing the composition of the present invention, as understood by a skilled artisan, the order of mixing can be determined in such a manner that the individual components can be melted at one time, or the filler and/or other components can be fed from a side feeder.

The polyester resin composition of the present invention exhibits a laser transmittance of higher than 18%, and more preferably, it may exhibit a laser transmittance of 18.1% or higher, 19% or higher, 20% or higher, 21% or higher, 22% or higher, 23% or higher, 24% or higher, 25% or higher, 26% or higher, 27% or higher, 28% or higher, or 29% or higher. There is no special limitation to the upper limit of the laser transmittance, and it may be, for example, 40% or lower, 39% or lower, 38% or lower, 37% or lower, 36% or lower, 35% or lower, or 34% or lower, but it is not limited thereto.

In an embodiment, the laser transmittance may be a transmittance exhibited by a specimen, manufactured by injection molding of the polyester resin composition of the present invention to a thickness of 1.5 mm, for a laser having a wavelength of 980 nm (near infrared (NIR)).

Also, in an embodiment, the polyester resin composition of the present invention can satisfy one or more of conditions (i) to (iv) below, more preferably can satisfy two or more of them, even more preferably can satisfy three or more of them, and most preferably can satisfy all of them:
(i) flame retardancy grade of V-0 at 1.5 mm thickness in UL94 flame retardancy test;
(ii) laser transmittance (more specifically, 980 nm laser transmittance) deviation of 5 or less (more specifically, 4 or less) when the mold temperature condition during injection is changed from 60°C to 80°C;
(iii) tensile strength of 120 MPa or more, impact strength of 6 KJ/m² or more, and heat deformation temperature (HDT) of 160°C or more;
(iv) low-temperature impact strength (-30°C) of 4.5 KJ/m² or more.

In an embodiment, the polyester resin composition of the present invention can be used as a material for laser welding transmission layer.

According to the other aspect of the present invention, a molded article comprising the polyester resin composition of the present invention is provided.

The molded article of the present invention is manufactured by extruding, casting, blow molding, or injection molding of a melt of the polyester resin composition of the present invention. The molded article may be in the form of a film or sheet.

In an embodiment, the molded article of the present invention is capable of laser welding, more specifically, black laser welding.

The present invention is explained in more detail through the following Examples and Comparative Examples. However, the scope of the present invention is not limited thereby in any manner.

### EXAMPLES

The components used in Examples and Comparative Examples of the present invention are explained below, and the amount of each component is described in Table 1.
(A): polybutylene terephthalate (PBT) (I.V.: about 1.1 dl/g)) (211H, Changchun)
(B): polyethylene terephthalate (PET) (JSB194, Huvis)
(C-1): polycarbonate (PC) (TRIREX 3022PJ, Samyang Corp.)
(C-2): polysiloxane-polycarbonate (Si-PC) (TRIREX ST63022PJ, Samyang Corp.)
(D): metal phosphinate-based flame retardant (Exolit OP1240, Clariant)
(E): glass fiber filler (CS321, KCC)

### Examples 1 to 18 and Comparative Examples 1 to 8

The components were uniformly mixed using a super mixer according to the compositional ratio shown in Table 1 below, and then melt-mixed at 220 to 280°C using a twinscrew extruder to prepare the composition as pellets through extrusion processing. After drying at 100°C for 5 hours or more, the composition was molded using an LS 170-ton injection molding machine at an injection temperature range of 220 to 280°C and a mold temperature range of 50 to 110°C at an injection pressure of 30 to 70. The properties of each of the prepared compositions were measured and summarized in Table 2 below.

The properties of each sample prepared in Examples and Comparative Examples were measured by the following methods, and the results are shown in Table 2 below.
- Tensile strength (MPa): Measured according to ISO 527
- Impact strength (KJ/m²): Measured according to ISO 179
- Heat deformation temperature (HDT) (°C): Measured according to ISO 75
- Flame retardancy: Measured using a 1.5 mm thick specimen according to UL94 V test method
- Transmittance: Measured using a laser transmittance measuring device from Eurovision at a wavelength of 980 nm for a 1.5 mm thick injection-molded square specimen
- Transmittance deviation: Transmittance per mold temperature was measured while changing the mold temperature condition in injection from 60°C to 80°C, and the difference was used as the transmittance deviation.
- Low-temperature impact strength (KJ/m²): Measured at -30°C according to ISO 179

**[Table 1]**

| Compositional ratio (parts by weight) | Examples | | | | | | | | | |
|---|---|---|---|---|---|---|---|---|---|---|
| | 1 | 2 | 3 | 4 | 5 | 6 | 7 | 8 | 9 | 10 |
| (A) | 30 | 30 | 27 | 27 | 35 | 35 | 31 | 31 | 25 | 25 |
| (B) | 20 | 20 | 18 | 18 | 15 | 15 | 21 | 21 | 17 | 17 |
| (A)/(B) | 1.5 | 1.5 | 1.5 | 1.5 | 2.33 | 2.33 | 1.48 | 1.48 | 1.47 | 1.47 |
| (C-1) | 5 | 5 | 10 | 10 | 5 | 5 | 5 | 5 | 10 | 10 |
| (C-2) | 0 | 0 | 0 | 0 | 0 | 0 | 0 | 0 | 0 | 0 |
| (D) | 10 | 10 | 10 | 10 | 10 | 10 | 8 | 8 | 13 | 13 |
| (E) | 35 | 35 | 35 | 35 | 35 | 35 | 35 | 35 | 35 | 35 |
| Mold temperature 60°C | o | | o | | o | | o | | o | |
| Mold temperature 80°C | | o | | o | | o | | o | | o |

**[Table 1] (continued)**

| Compositional ratio (parts by weight) | Examples | | | | | | | |
|---|---|---|---|---|---|---|---|---|
| | 11 | 12 | 13 | 14 | 15 | 16 | 17 | 18 |
| (A) | 27 | 27 | 27 | 27 | 25 | 25 | 28 | 28 |
| (B) | 18 | 18 | 18 | 18 | 20 | 20 | 12 | 12 |
| (A)/(B) | 1.5 | 1.5 | 1.5 | 1.5 | 1.25 | 1.25 | 2.33 | 2.33 |
| (C-1) | 0 | 0 | 5 | 5 | 5 | 5 | 7.5 | 7.5 |
| (C-2) | 10 | 10 | 5 | 5 | 5 | 5 | 7.5 | 7.5 |
| (D) | 10 | 10 | 10 | 10 | 10 | 10 | 10 | 10 |
| (E) | 35 | 35 | 35 | 35 | 35 | 35 | 35 | 35 |
| Mold temperature 60°C | o | | o | | o | | o | |
| Mold temperature 80°C | | o | | o | | o | | o |

**[Table 1] (continued)**

| Compositional ratio (parts by weight) | Comparative Examples | | | | | | | |
|---|---|---|---|---|---|---|---|---|
| | 1 | 2 | 3 | 4 | 5 | 6 | 7 | 8 |
| (A) | 33 | 33 | 40 | 40 | 25 | 25 | 38 | 38 |
| (B) | 22 | 22 | 10 | 10 | 25 | 25 | 12 | 12 |
| (A)/(B) | 1.5 | 1.5 | 4 | 4 | 1 | 1 | 3.2 | 3.2 |
| (C-1) | 0 | 0 | 5 | 5 | 5 | 5 | 5 | 5 |
| (C-2) | 0 | 0 | 0 | 0 | 0 | 0 | 0 | 0 |
| (D) | 10 | 10 | 10 | 10 | 10 | 10 | 10 | 10 |
| (E) | 35 | 35 | 35 | 35 | 35 | 35 | 35 | 35 |
| Mold temperature 60°C | o | | o | | o | | o | |
| Mold temperature 80°C | | o | | o | | o | | o |

**[Table 2]**

| Property | Examples | | | | | | | | | |
|---|---|---|---|---|---|---|---|---|---|---|
| | 1 | 2 | 3 | 4 | 5 | 6 | 7 | 8 | 9 | 10 |
| Tensile strength (MPa) | 128 | 130 | 123 | 124 | 136 | 140 | 131 | 133 | 121 | 122 |
| Impact strength (KJ/m²) | 7.1 | 6.8 | 8.5 | 8.1 | 6.4 | 6.1 | 7.5 | 7.2 | 8.2 | 7.8 |
| HDT (°C) | 180 | 182 | 171 | 172 | 192 | 196 | 182 | 183 | 168 | 170 |
| Flame retardancy (1.5T)(UL94) | V-0 | V-0 | V-0 | V-0 | V-0 | V-0 | V-0 | V-0 | V-0 | V-0 |
| Transmittance (%) | 32 | 29 | 34 | 32 | 25 | 21 | 34 | 32 | 31 | 28 |
| Transmittance deviation | 3 | | 2 | | 4 | | 2 | | 3 | |
| Low-temperature Impact strength (-30°C) | 5.1 | 5 | 6.8 | 6.6 | 4.8 | 4.6 | 5.3 | 5.1 | 6.3 | 6.2 |

**[Table 2] (continued)**

| Property | Examples | | | | | | | |
|---|---|---|---|---|---|---|---|---|
| | 11 | 12 | 13 | 14 | 15 | 16 | 17 | 18 |
| Tensile strength (MPa) | 122 | 123 | 122 | 124 | 121 | 122 | 123 | 126 |
| Impact strength (KJ/m²) | 8.7 | 8.3 | 8.5 | 8.2 | 8.9 | 8.6 | 7.8 | 7.5 |
| HDT (°C) | 170 | 172 | 171 | 173 | 168 | 170 | 169 | 171 |
| Flame retardancy (1.5T)(UL94) | V-0 | V-0 | V-0 | V-0 | V-0 | V-0 | V-0 | V-0 |
| Transmittance (%) | 33 | 31 | 34 | 32 | 35 | 33 | 29 | 27 |
| Transmittance deviation | 2 | | 2 | | 2 | | 2 | |
| Low-temperature Impact strength (-30°C) | 7.2 | 7 | 7 | 7 | 7.2 | 7.1 | 6.1 | 6 |

**[Table 2] (continued)**

| Property | Comparative Examples | | | | | | | |
|---|---|---|---|---|---|---|---|---|
| | 1 | 2 | 3 | 4 | 5 | 6 | 7 | 8 |
| Tensile strength (MPa) | 131 | 135 | 137 | 142 | 115 | 116 | 133 | 135 |
| Impact strength (KJ/m²) | 5.4 | 4.8 | 5.6 | 5.1 | 7.3 | 7.1 | 5.8 | 5.3 |
| HDT (°C) | 185 | 188 | 194 | 197 | 142 | 143 | 190 | 192 |
| Flame retardancy (1.5T)(UL94) | V-2 | V-2 | V-0 | V-0 | V-0 | V-0 | V-0 | V-0 |
| Transmittance (%) | 17 | 10 | 16 | 10 | 33 | 31 | 18 | 11 |
| Transmittance deviation | 7 | | 6 | | 2 | | 7 | |
| Low-temperature Impact strength (-30°C) | 2.2 | 1.8 | 3.1 | 3 | 5 | 4.8 | 3.3 | 3.1 |

As shown in Table 2 above, the compositions of Examples 1 to 18 exhibited excellent mechanical properties and flame retardancy, and at the same time, exhibited a high level of laser transmittance and the transmittance deviation according to the mold temperature conditions was not large.

On the other hand, in comparison with Examples, the compositions of Comparative Examples exhibited significantly low laser transmittance (Comparative Examples 1 to 4, 7, 8), significantly large laser transmittance deviation (Comparative Examples 1 to 4, 7, 8), poor flame retardancy (Comparative Examples 1 and 2), poor heat resistance due to low HDT (Comparative Examples 5 and 6), poor impact strength (Comparative Examples 1 to 4, 7, 8), poor tensile strength (Comparative Examples 5 and 6), poor low-temperature impact strength (Comparative Examples 1 to 4, 7, 8)-that is, at least one or more of the evaluated properties were inferior.

## Claims

1. A polyester resin composition comprising:
(A) polybutylene terephthalate;
(B) polyethylene terephthalate;
(C) polycarbonate, polysiloxane-polycarbonate copolymer, or a mixture thereof; and
(D) flame retardant;
wherein the polybutylene terephthalate is comprised in an amount of from more than 1 part by weight to less than 3.2 parts by weight, based on 1 part by weight of the polyethylene terephthalate, and the composition exhibits a laser transmittance of higher than 18%.

2. The polyester resin composition of claim 1, wherein the polycarbonate is aromatic polycarbonate.

3. The polyester resin composition of claim 1, wherein the polysiloxane-polycarbonate copolymer comprises a hydroxy-terminated siloxane and a polycarbonate block as repeated units.

4. The polyester resin composition of claim 1, wherein the flame retardant is non-halogen flame retardant.

5. The polyester resin composition of claim 1, which further comprises filler.

6. The polyester resin composition of claim 5, wherein the filler is glass fiber.

7. The polyester resin composition of claim 1, which satisfies one or more of conditions (i) to (iv) below:
(i) flame retardancy grade of V-0 at 1.5 mm thickness in UL94 flame retardancy test;
(ii) laser transmittance deviation of 5 or less when the mold temperature condition during injection is changed from 60°C to 80°C;
(iii) tensile strength of 120 MPa or more, impact strength of 6 KJ/m² or more, and heat deformation temperature (HDT) of 160°C or more;
(iv) low-temperature impact strength (-30°C) of 4.5 KJ/m² or more.

8. The polyester resin composition of claim 1, which is used as a material for laser welding transmission layer.

9. A molded article comprising the polyester resin composition of any one of claims 1 to 8.

10. The molded article of claim 9, which is capable of laser welding.
